# EUROPEAN PATENT APPLICATION

(11) **EP 3 352 278 A1**
(43) Date of publication of application: **25.07.2018**
(21) Application number: 16846249.7
(22) Date of filing: 31.08.2016
(51) Int. Cl.: H01M 10/0562, H01M 4/62

(54) **ALL-SOLID SECONDARY BATTERY**

(30) Priority: 16.09.2015 JP 2015182471
(71) Applicant: Zeon Corporation, Tokyo 100-8246 (JP)
(72) Inventor: MAEDA Kouichirou, Tokyo 100-8246 (JP); OGURO Hiroki, Tokyo 100-8246 (JP)
(74) Representative: Parchmann, Stefanie
(86) International application number: PCT/JP2016/075385
(87) International publication number: WO 2017/047378

(57) **Abstract**

Provided is an all-solid-state secondary battery that has a positive electrode having a positive electrode active material layer, a negative electrode having a negative electrode active material layer, and a solid electrolyte layer between the positive and negative electrode active material layers, said battery being formed using a binder that contains a water-soluble polymer and a polymer having a particle structure.

## Description

### {Technical Field}

The present invention relates to an all-solid-state secondary battery such as an all-solid-state lithium ion secondary battery.

### {Background Art}

In recent years, demand for a secondary battery such as a lithium ion battery has been increasing in a variety of applications such as a domestic small power storage device, an electric motorcycle, an electric vehicle, and a hybrid electric vehicle in addition to a portable terminal such as a portable information terminal or a portable electronic device.

With spread of the applications, further improvement of safety of a secondary battery is required. In order to ensure safety, a method for preventing liquid leakage, and a method for using a solid electrolyte in place of a combustible organic solvent electrolyte are useful.

As the solid electrolyte, a polymer solid electrolyte using polyethylene oxide or the like is known (Patent Literature 1). However, the polymer solid electrolyte is a combustible material. In addition, as the solid electrolyte, an inorganic solid electrolyte formed of an inorganic material has been also proposed (Patent Literature 2 or the like). An inorganic solid electrolyte is a solid electrolyte formed of an inorganic substance and is a non-combustible material as compared with a polymer solid electrolyte, and has very high safety as compared with an organic solvent electrolyte usually used. As described in Patent Literature 2, development of an all-solid-state secondary battery with high safety using an inorganic solid electrolyte is progressing.

An all-solid-state secondary battery includes an inorganic solid electrolyte layer as an electrolyte layer between a positive electrode and a negative electrode. Patent Literatures 3 and 4 describe an all-solid-state lithium secondary battery having a solid electrolyte layer formed by a method for applying a solid electrolyte layer slurry composition containing solid electrolyte particles and a solvent onto a positive electrode or a negative electrode and drying the composition (application method). In a case where an electrode or an electrolyte layer is formed by the application method, the viscosity or the fluidity of a slurry composition containing an active material or an electrolyte needs to be within a range of conditions making application possible. Meanwhile, it is important for an electrode and an electrolyte layer formed by applying a slurry composition and then drying a solvent to include an additive other than an active material and an electrolyte, such as a binder in order to exhibit characteristics as a battery. Therefore, Patent Literature 5 has proposed use of an acrylate-based polymer for a binder.

### {Citation List}

### {Patent Literature}

Patent Literature 1: JP 4134617 B2
Patent Literature 2: JP 59-151770 A
Patent Literature 3: JP 2009-176484 A
Patent Literature 4: JP 2009-211950 A
Patent Literature 5: WO 2011/105574 A

### {Summary of Invention}

### {Technical Problem}

However, according to studies by the present inventors, all-solid-state lithium secondary batteries described in Patent Literatures 3 and 4 may have insufficient battery capacity characteristics or cycle characteristics due to insufficient ion conductivity in a solid electrolyte layer or an active material layer. In addition, Patent Literature 5 has proposed an all-solid-state secondary battery having excellent battery characteristics. However, a battery having higher characteristics is required.

An object of the present invention is to provide an all-solid-state secondary battery having good battery characteristics.

### {Solution to Problem}

As a result of intensive studies, the present inventors have found that the above-described object can be achieved by using a binder composition obtained by combining a polymer having a particle structure with a water-soluble polymer as a binder for an all-solid-state secondary battery, and have completed the present invention.

That is, the present invention provides:
(1) an all-solid-state secondary battery including a positive electrode having a positive electrode active material layer, a negative electrode having a negative electrode active material layer, and a solid electrolyte layer disposed between the positive electrode active material layer and the negative electrode active material layer, in which the all-solid-state secondary battery is formed using a binder containing a polymer having a particle structure and a water-soluble polymer;
(2) the all-solid-state secondary battery according to (1), in which the solid electrolyte layer contains solid electrolyte particles, and the solid electrolyte particles are formed of sulfide glass constituted by Li₂S and P₂S₅;
(3) the all-solid-state secondary battery according to (1) or (2), in which the binder contains 80 to 99.1 wt% of the polymer having a particle structure;
(4) the all-solid-state secondary battery according to any one of (1) to (3), in which the polymer having a particle structure is an acrylate-based polymer; and
(5) the all-solid-state secondary battery according to any one of (1) to (4), in which the binder according to (1) is formed of a binder composition obtained by exchanging a solvent of a mixture of an aqueous dispersion of the polymer having a particle structure and a solution of the water-soluble polymer for an organic solvent.

### {Advantageous Effects of Invention}

The present invention can provide an all-solid-state secondary battery having good battery characteristics. More specifically, by inclusion of a binder containing a polymer having a particle structure and a water-soluble polymer in a solid electrolyte layer or the like, an all-solid-state secondary battery having good charge/discharge performance can be provided. A solid electrolyte containing sulfur reacts with a highly polar organic solvent when coming into contact with the organic solvent. Therefore, a slurry for a battery cannot be manufactured using a polar solvent such as N-methylpyrrolidone. Therefore, a water-soluble polymer having ion conductivity, such as polyethylene oxide cannot be used as a binder for a battery. The present invention can use a water-soluble polymer such as polyethylene oxide as a binder for an all-solid-state secondary battery by using a combination of a polymer having a particle structure and a water-soluble polymer, and thus can provide an all-solid-state secondary battery having high ion conductivity.

### {Description of Embodiments}

### (All-solid-state secondary battery)

Hereinafter, the all-solid-state secondary battery of the present invention will be described. The all-solid-state secondary battery of the present invention includes a positive electrode having a positive electrode active material layer, a negative electrode having a negative electrode active material layer, and a solid electrolyte layer disposed between the positive and negative electrode active material layers, and is formed using a binder containing a polymer having a particle structure and a water-soluble polymer. That is, in the all-solid-state secondary battery of the present invention, a binder containing a polymer having a particle structure and a water-soluble polymer is used in at least one of the positive electrode active material layer, the negative electrode active material layer, and the solid electrolyte layer. Note that, the positive electrode has the positive electrode active material layer on a current collector, and that the negative electrode has the negative electrode active material layer on a current collector.

Hereinafter, first, the binder containing a polymer having a particle structure and a water-soluble polymer will be described, and thereafter, (1) the solid electrolyte layer, (2) the positive electrode active material layer, and (3) the negative electrode active material layer will be described.

### (Binder)

For example, a binder is used for binding solid electrolyte particles to form a solid electrolyte layer. A binder used in the present invention contains a polymer having a particle structure and a water-soluble polymer. It is known in Patent Literature 5 or the like that an acrylate-based polymer is suitable as a binder. Use of an acrylate-based polymer as a binder is preferable because voltage resistance can be increased and an energy density of an all-solid-state secondary battery can be increased. However, higher performance is demanded.

The acrylate-based polymer can be obtained by a solution polymerization method, an emulsion polymerization method, or the like, and the obtained polymer is usually a linear polymer and soluble in an organic solvent. In a case where such a polymer is used as a binder, the polymer is conventionally dissolved in an organic solvent to be used.

### (Polymer having particle structure)

As the polymer having a particle structure used in the present invention, an acrylate-based polymer is preferably used, and an acrylate-based polymer having a particle structure is more preferably used.

The acrylate-based polymer is a polymer containing a repeating unit (polymerization unit) obtained by polymerizing an acrylate or a methacrylate (hereinafter, also abbreviated as "(meth)acrylate") and a derivative thereof. Specific examples thereof include a (meth)acrylate homopolymer, a (meth)acrylate copolymer, and a copolymer of a (meth)acrylate and another monomer copolymerizable with the (meth)acrylate.

Examples of the (meth)acrylate include an alkyl acrylate such as methyl acrylate, ethyl acrylate, n-propyl acrylate, isopropyl acrylate, n-butyl acrylate, t-butyl acrylate, 2-ethylhexyl acrylate, or benzyl acrylate; an alkoxyalkyl acrylate such as 2-methoxyethyl acrylate or 2-ethoxyethyl acrylate; a 2-(perfluoroalkyl) ethyl acrylate such as 2-(perfluorobutyl) ethyl acrylate or 2-(perfluoropentyl) ethyl acrylate; an alkyl methacrylate such as methyl methacrylate, ethyl methacrylate, n-propyl methacrylate, isopropyl methacrylate, n-butyl methacrylate, t-butyl methacrylate, 2-ethylhexyl methacrylate, lauryl methacrylate, tridecyl methacrylate, stearyl methacrylate, or benzyl methacrylate; and a 2-(perfluoroalkyl) ethyl methacrylate such as 2-(perfluorobutyl) ethyl methacrylate or 2-(perfluoropentyl) ethyl methacrylate. Among these (meth)acrylates, an alkyl acrylate such as methyl acrylate, ethyl acrylate, n-propyl acrylate, isopropyl acrylate, n-butyl acrylate, t-butyl acrylate, 2-ethylhexyl acrylate, or benzyl acrylate; and an alkoxyalkyl acrylate such as 2-methoxyethyl acrylate or 2-ethoxyethyl acrylate are preferable due to high adhesion to a solid electrolyte in the present invention.

A content ratio of a monomer unit derived from a (meth)acrylate in the acrylate-based polymer is usually 40% by mass or more, preferably 50% by mass or more, and more preferably 60% by mass or more. Note that, an upper limit of a content ratio of a monomer unit derived from a (meth)acrylate in the acrylate-based polymer is usually 100% by mass or less, and preferably 99% by mass or less.

The acrylate-based polymer can be a copolymer of a (meth)acrylate and a monomer copolymerizable with the (meth)acrylate. Examples of the copolymerizable monomer include a styrene-based monomer such as styrene, vinyltoluene, t-butylstyrene, vinylbenzoic acid, methyl vinylbenzoate, vinylnaphthalene, hydroxymethylstyrene, α-methylstyrene, or divinylbenzene; an amide-based monomer such as acrylamide, methacrylamide, N-methylol acrylamide, or acrylamide-2-methylpropanesulfonic acid; an α,β-unsaturated nitrile compound such as acrylonitrile or methacrylonitrile; an olefin such as ethylene or propylene; a diene-based monomer such as butadiene or isoprene; a vinyl ester such as vinyl acetate, vinyl propionate, vinyl butyrate, or vinyl benzoate; a vinyl ether such as methyl vinyl ether, ethyl vinyl ether, or butyl vinyl ether; a vinyl ketone such as methyl vinyl ketone, ethyl vinyl ketone, butyl vinyl ketone, hexyl vinyl ketone, or isopropenyl vinyl ketone; a heterocyclic ring-containing vinyl compound such as N-vinyl pyrrolidone, vinyl pyridine, or vinyl imidazole; and a silane such as vinyl dimethylmethoxysilane, vinyl trimethylsilane, divinyl dimethoxysilane, divinyl dimethylsilane, 1,3-divinyl-1,1,3,3-tetramethyldisiloxane, trivinylmethylsilane, tetravinylsilane, allyldimethylmethoxysilane, allyltrimethylsilane, diallyldimethoxysilane, diallyldimethylsilane, γ-methacryloyloxypropyl trimethoxysilane, or γ-methacryloyloxypropylmethyl dimethoxysilane.

Among these monomers, a styrene-based monomer, an amide-based monomer, an α,β-unsaturated nitrile compound, and a silane are preferable from a viewpoint of affinity for an organic solvent. Furthermore, a silane is more preferable from viewpoints of being able to reduce the use amount of a binder due to good binding force and having excellent adhesion to a current collector due to good adhesion to a metal. A content ratio of the copolymerizable monomer in the acrylate-based polymer is usually 50% by mass or less, preferably 40% by mass or less, and more preferably 30% by mass or less.

The binder used in the present invention contains a polymer having a particle structure. An index indicating that a particle structure is contained is a gel fraction. The gel fraction is a value indicating a weight ratio of a component insoluble in an organic solvent due to bonding, entanglement, or the like of polymer chains with respect to the entire components. The gel fraction of the polymer having a particle structure in the present invention is preferably 70% or more, and more preferably 90% or more. The gel fraction within the above-described range can suppress a phenomenon that the particle structure cannot be maintained because of a too small gel fraction, and as a result, battery performance is easily deteriorated, and a phenomenon that flowing easily occurs at a high temperature.

In the present invention, in order to give a particle structure to a polymer contained in the binder, a compound generally capable of acting as a crosslinking agent or a monomer capable of forming a self-crosslinking structure is copolymerized in polymer polymerization.

In order to adjust the gel fraction within a predetermined range, a crosslinking agent is preferably copolymerized as described above. Examples of the crosslinking agent include a monomer having two or more double bonds. Examples thereof include a polyfunctional acrylate compound such as ethylene glycol dimethacrylate, diethylene glycol dimethacrylate, trimethylolpropane triacrylate, polyethylene glycol diacrylate, polypropylene glycol diacrylate, trimethylolpropane trimethacrylate, pentaerythritol tetraacrylate, or ethylene glycol dimethacrylate; and a polyfunctional aromatic compound such as divinylbenzene. A polyfunctional acrylate compound such as ethylene glycol dimethacrylate is preferable.

The use amount of a crosslinking agent depends on the type thereof, but is preferably 0.01 to 5 parts by mass, and more preferably 0.05 to 1 part by mass with respect to 100 parts by mass of the total amount of the monomers.

Examples of the monomer easily forming a self-crosslinking structure include a diene-based monomer such as butadiene or isoprene; and an unsaturated nitrile compound such as acrylonitrile. Acrylonitrile is preferably copolymerized.

### (Method for manufacturing polymer having particle structure)

A method for manufacturing the above-described polymer having a particle structure can be any one of polymerization methods in a dispersion system, such as a suspension polymerization method, a bulk polymerization method, and an emulsion polymerization method. The polymerization reaction may be any one of ion polymerization, radical polymerization, living radical polymerization, and the like.

Among these methods, the emulsion polymerization method is preferable because a polymer having a particle structure can be obtained in a state of being dispersed in an aqueous solvent as it is. Here, the aqueous solvent is a solvent containing water, and is preferably water because water is not combustible and makes it possible to easily obtain a dispersion of the above-described polymer having a particle structure.

Note that, water may be used as a main solvent and an aqueous solvent other than water may be mixed and used within a range which does not impair an effect of the present invention and can ensure a dispersion state of the above-described copolymer. Examples of the aqueous solvent other than water include a ketone, an alcohol, a glycol, a glycol ether, and an ether.

Note that, emulsion polymerization can be performed in accordance with a usual method. In emulsion polymerization, a polymerization auxiliary material usually used, such as an emulsifier, a polymerization initiator, a molecular weight regulator, or a chain transfer agent can be used.

As the emulsifier, any emulsifier can be used as long as a desired polymer can be obtained, and examples thereof include an anionic surfactant, a nonionic surfactant, a cationic surfactant, and an amphoteric surfactant. Among these emulsifiers, an anionic surfactant such as an alkylbenzene sulfonate, an aliphatic sulfonate, a sulfate of a higher alcohol, an α-olefin sulfonate, or an alkyl ether sulfate can be preferably used.

Any amount of the emulsifier can be used as long as a desired polymer can be obtained. The amount is preferably 0.5 parts by mass or more, more preferably 1 part by mass or more, preferably 10 parts by mass or less, and more preferably 5 parts by mass or less with respect to 100 parts by mass of a monomer composition.

Examples of a polymerization initiator used in polymerization include an organic peroxide such as lauroyl peroxide, diisopropyl peroxydicarbonate, di-2-ethylhexyl peroxydicarbonate, t-butyl peroxypivalate, or 3,3,5-trimethyl hexanoyl peroxide; an azo compound such as α,α'-azobisisobutyronitrile; ammonium persulfate; and potassium persulfate.

The polymer having a particle structure used in the present invention is used in a state of being dispersed in an aqueous solvent (aqueous dispersion).

### (Water-soluble polymer)

The binder used in the present invention includes a water-soluble polymer. Examples of the water-soluble polymer used in the present invention include polyethylene oxide, polyethylene glycol, and polyvinyl alcohol. Polyethylene oxide is preferable.

The water-soluble polymer used in the present invention has a molecular weight usually of 500 to 5,000,000, preferably of 5,000 to 3,000,000.

The water-soluble polymer used in the present invention usually has viscosity of 100 mPa·s or more and 100,000 mPa·s or less when the water-soluble polymer is formed into a 1% aqueous solution.

The binder used in the present invention contains a polymer having a particle structure and a water-soluble polymer, and a content ratio of the polymer having a particle structure in the binder is preferably 80 to 99.1 wt%, more preferably 85 to 99 wt%, and still more preferably 90 to 98 wt%. The content ratio of the polymer having a particle structure within the above-described range can suppress a phenomenon that ion conductivity is lowered because of a too large content ratio of the polymer having a particle structure. Furthermore, the content ratio of the polymer having a particle structure within the above range can suppress a phenomenon that an electrode becomes hard because of a too small content ratio of the polymer having a particle structure and cracking or chipping of the electrode easily occurs during cutting or winding of the electrode when a battery is assembled.

A content ratio of the water-soluble polymer in the binder is preferably 0.1 to 10 wt%, and more preferably 0.5 to 5 wt%. The content ratio of the water-soluble polymer within the above-described range can suppress a phenomenon that an electrode becomes hard because of a too large content ratio of the water-soluble polymer, and can suppress a phenomenon that an effect of the present invention is hardly exhibited because of a too small content ratio of the water-soluble polymer.

### (Binder composition)

The binder used in the present invention is preferably formed of a binder composition obtained by exchanging a solvent of a mixture of an aqueous dispersion of the polymer having a particle structure and a solution of the water-soluble polymer for an organic solvent.

### (Mixture)

The mixture used for obtaining the binder composition used in the present invention is obtained by mixing an aqueous dispersion of the polymer having a particle structure obtained above and an aqueous solution (water-soluble polymer solution) of the above-described water-soluble polymer. That is, the solvent of the mixture is an aqueous solvent such as water.

### (Method for manufacturing binder composition)

The binder composition used in the present invention is obtained by exchanging a solvent of the mixture for an organic solvent. Here, solvent exchange can be performed by a known method. For example, a mixture and an organic solvent are put in a rotary evaporator, and solvent exchange and dehydration operation can be performed at a predetermined temperature under reduced pressure.

Note that, the solid content concentration of the binder composition used in the present invention is preferably 1 to 20 wt%. The amount of water contained in the binder composition used in the present invention is preferably less than 1000 ppm, more preferably less than 500 ppm, and still more preferably less than 100 ppm.

### (Organic solvent)

Examples of the organic solvent which can be used for solvent exchange include an organic solvent having a boiling point of 100°C or higher. Preferable examples of the organic solvent having a boiling point of 100°C or higher include an aromatic hydrocarbon such as toluene or xylene; an ether such as cyclopentyl methyl ether; and an ester such as butyl acetate. Xylene is more preferable. Note that, these solvents can be used singly or in mixture of two or more kinds thereof.

The above-described water-soluble polymer is not dissolved or uniformly dispersed in an organic solvent having a low polarity, such as toluene or xylene, and therefore it is impossible to use the water-soluble polymer singly as a binder for an all-solid-state secondary battery.

However, in the present invention, by mixing an aqueous dispersion of the polymer having a particle structure and a solution of the water-soluble polymer to form a mixture, and then exchanging a solvent of the mixture for an organic solvent, the water-soluble polymer can be dispersed uniformly in the organic solvent, and thus can be used as a binder for an all-solid-state secondary battery.

The glass transition temperature (Tg) of the binder is preferably -50 to 25°C, more preferably -45 to 15°C, and particularly preferably -40 to 5°C from a viewpoint of being able to obtain an all-solid-state secondary battery having excellent strength and flexibility, and high output characteristics. Note that, the glass transition temperature of the binder can be adjusted by combining various monomers.

### (1) Solid electrolyte layer

The solid electrolyte layer used in the present invention contains solid electrolyte particles and a binder for a solid electrolyte layer, and the binder for a solid electrolyte layer is preferably a binder containing the polymer having a particle structure and the water-soluble polymer described above.

The solid electrolyte layer is formed by applying a solid electrolyte layer slurry composition containing solid electrolyte particles and a binder for a solid electrolyte layer onto a positive electrode active material layer or a negative electrode active material layer described below, and drying the composition. The solid electrolyte layer slurry composition is manufactured by mixing solid electrolyte particles, a binder for a solid electrolyte layer, an organic solvent, and other components added as necessary.

### (Solid electrolyte particles)

The solid electrolyte is used in a form of particles. Solid electrolyte particles which have been ground are used. Therefore, the solid electrolyte particles are not perfectly spherical but indefinite-form. In general, the size of a fine particle is measured by a method for measuring scattered light by irradiating a particle with a laser beam, for example. However, the particle diameter in this case is a value obtained by assuming that the shape of one particle is spherical. In a case where a plurality of particles is measured together, a presence ratio of particles having a corresponding particle diameter can be indicated as a particle size distribution. Solid electrolyte particles to form a solid electrolyte layer are often indicated by a value measured by this method as an average particle diameter.

In the solid electrolyte layer, it is effective for improving battery performance to reduce resistance of ion conduction. Ion conduction resistance of the solid electrolyte layer is largely influenced by particle diameters of the solid electrolyte particles. Generally, ion transfer resistance inside the solid electrolyte particles is smaller than transfer resistance between the particles. Therefore, in the solid electrolyte particles, an average particle diameter of a predetermined value or less can suppress a phenomenon that an air gap inside the electrolyte layer becomes large, and as a result, an ion transfer resistance value increases. Furthermore, an average particle diameter of a predetermined value or more can avoid a problem that inter-particle resistance becomes too large or the viscosity of the solid electrolyte layer slurry composition becomes high, and as a result, it is difficult to control the thickness of the solid electrolyte layer. Accordingly, it is necessary to set the average particle diameter within an appropriate range. However, by controlling not only the average particle diameter but also a distribution state of the particle diameter within a specific range, battery performance is improved.

The average particle diameter of the solid electrolyte particles is preferably 0.1 to 10 µm. The average particle diameter of the solid electrolyte particles within the above-described range makes it possible to obtain a solid electrolyte layer slurry composition having excellent dispersibility and coatability.

The solid electrolyte particles are not particularly limited as long as having conductivity of a lithium ion, but preferably contain a crystalline inorganic lithium ion conductor or an amorphous inorganic lithium ion conductor.

Examples of the crystalline inorganic lithium ion conductor include Li₃N, LISICON (Li₁₄Zn (GeO₄)₄), perovskite type Li_{0.5}La_{0.5}TiO₃, LIPON (Li_{3+y}PO₄₋ₓNₓ), and Thio-LISICON (Li_{3.25}Ge_{0.25}P_{0.75}S₄).

The amorphous inorganic lithium ion conductor is not particularly limited as long as containing S (sulfur atom) and having ion conductivity (sulfide solid electrolyte particles). Here, in a case where the all-solid-state secondary battery of the present invention is an all-solid-state lithium secondary battery, examples of a sulfide solid electrolyte material used include a material formed using a raw material composition containing Li₂S and a sulfide of an element belonging to groups 13 to 15. Examples of a method for synthesizing a sulfide solid electrolyte material using such a raw material composition include an amorphization method. Examples of the amorphization method include a mechanical milling method and a melt quenching method, and the mechanical milling method is particularly preferable. This is because the mechanical milling method makes it possible to perform a treatment at normal temperature and to simplify a manufacturing process.

Examples of the above-described element belonging to groups 13 to 15 include Al, Si, Ge, P, As, and Sb. Specific examples of a sulfide of an element belonging to groups 13 to 15 include Al₂S₃, SiS₂, GeS₂, P₂S₃, P₂S₅, As₂S₃, and Sb₂S₃. Among these sulfides, a sulfide belonging to group 14 or 15 is preferably used in the present invention. Particularly, in the present invention, the sulfide solid electrolyte material formed using a raw material composition containing Li₂S and a sulfide of an element belonging to groups 13 to 15 is preferably a Li₂S-P₂S₅ material, a Li₂S-SiS₂ material, a Li₂S-GeS₂ material, or a Li₂S-Al₂S₃ material, and more preferably a Li₂S-P₂S₅ material. This is because these materials have excellent Li ion conductivity.

In addition, the sulfide solid electrolyte material in the present invention preferably contains crosslinking sulfur. This is because inclusion of crosslinking sulfur increases ion conductivity. Furthermore, in a case where the sulfide solid electrolyte material contains crosslinking sulfur, usually, reactivity with a positive electrode active material is high, and a high resistance layer is easily generated. Note that, "inclusion of crosslinking sulfur" can be determined, for example, by considering a measurement result of a Raman spectrum, a raw material composition ratio, and a measurement result of NMR.

The molar fraction of Li₂S in a Li₂S-P₂S₅ material or a Li₂S-Al₂S₃ material is, for example, within a range of 50 to 74%, preferably within a range of 60 to 74% from a viewpoint of being able to obtain a sulfide solid electrolyte material containing crosslinking sulfur more surely.

The sulfide solid electrolyte material in the present invention may be sulfide glass or crystallized sulfide glass obtained by subjecting the sulfide glass to a heat treatment. The sulfide glass can be obtained by the above-described amorphization method, for example. The crystallized sulfide glass can be obtained by subjecting sulfide glass to a heat treatment, for example.

Particularly, in the present invention, the sulfide solid electrolyte material is preferably crystallized sulfide glass represented by Li₇P₃S₁₁ constituted by Li₂S and P₂S₅. This is because the crystallized sulfide glass represented by Li₇P₃S₁₁ has particularly excellent Li ion conductivity. As a method for synthesizing Li₇P₃S₁₁, for example, Li₂S and P₂S₅ are mixed at a molar ratio of 70: 30, are amorphized with a ball mill to synthesize sulfide glass, and the obtained sulfide glass is subjected to a heat treatment at 150°C to 360°C to synthesize Li₇P₃S₁₁.

The content of the binder in the solid electrolyte layer slurry composition is preferably 0.1 to 10 parts by mass, more preferably 0.5 to 7 parts by mass, and particularly preferably 0.5 to 5 parts by mass with respect to 100 parts by mass of the solid electrolyte particles from a viewpoint of being able to suppress an increase in resistance of the solid electrolyte layer by inhibiting transfer of lithium while a binding property between solid electrolyte particles is maintained.

### (Organic solvent)

As the organic solvent for manufacturing the solid electrolyte layer slurry composition, those exemplified as the above-described organic solvent which can be used for solvent exchange can be used.

The content of an organic solvent in the solid electrolyte layer slurry composition is preferably 10 to 700 parts by mass, and more preferably 30 to 500 parts by mass with respect to 100 parts by mass of the solid electrolyte particles from a viewpoint of being able to obtain excellent coating characteristics while dispersibility of solid electrolyte particles in the solid electrolyte layer slurry composition is maintained.

The solid electrolyte layer slurry composition may contain a component having functions of a dispersing agent, a leveling agent, and a defoaming agent as other components added as necessary in addition to the above-described components. The component is not particularly limited as long as having no influence on a battery reaction.

### (Dispersing agent)

Examples of the dispersing agent include an anionic compound, a cationic compound, a nonionic compound, and a polymer compound. The dispersing agent is selected depending on solid electrolyte particles used. The content of the dispersing agent in the solid electrolyte layer slurry composition is preferably within a range having no influence on battery characteristics, and is specifically 10 parts by mass or less with respect to 100 parts by mass of the solid electrolyte particles.

### (Leveling agent)

Examples of the leveling agent include a surfactant such as an alkyl-based surfactant, a silicone-based surfactant, a fluorine-based surfactant, or a metal-based surfactant. By mixing the above-described surfactant, it is possible to prevent repelling which occurs when the solid electrolyte layer slurry composition is applied onto a surface of a positive electrode active material layer or a negative electrode active material layer described below, and to improve smoothness of positive and negative electrodes. The content of the leveling agent in the solid electrolyte layer slurry composition is preferably within a range having no influence on battery characteristics, and is specifically 10 parts by mass or less with respect to 100 parts by mass of the solid electrolyte particles.

### (Defoaming agent)

Examples of the defoaming agent include a mineral oilbased defoaming agent, a silicone-based defoaming agent, and a polymer-based defoaming agent. The defoaming agent is selected depending on solid electrolyte particles used. The content of the defoaming agent in the solid electrolyte layer slurry composition is preferably within a range having no influence on battery characteristics, and is specifically 10 parts by mass or less with respect to 100 parts by mass of the solid electrolyte particles.

### (2) Positive electrode active material layer

The positive electrode active material layer is formed by applying a positive electrode active material layer slurry composition containing a positive electrode active material, solid electrolyte particles, and a binder for a positive electrode onto a surface of a current collector described below, and drying the composition. The positive electrode active material layer slurry composition is manufactured by mixing a positive electrode active material, solid electrolyte particles, a binder for a positive electrode, an organic solvent, and other components added as necessary.

### (Positive electrode active material)

The positive electrode active material is a compound capable of occluding and releasing a lithium ion. The positive electrode active material is roughly classified into a material formed of an inorganic compound and a material formed of an organic compound.

Examples of the positive electrode active material formed of an inorganic compound include a transition metal oxide, a composite oxide of lithium and a transition metal, and a transition metal sulfide. Examples of the above-described transition metal include Fe, Co, Ni, and Mn. Specific examples of the inorganic compound used for the positive electrode active material include a lithium-containing composite metal oxide such as LiCoO₂, LiNiO₂, LiMnO₂, LiMn₂O₄, LiFePO₄, or LiFeVO₄; a transition metal sulfide such as TiS₂, TiS₃, or amorphous MoS₂; and a transition metal oxide such as Cu₂V₂O₃, amorphous V₂O-P₂O₅, MoO₃, V₂O₅, or V₆O₁₃. These compounds may have been subjected to partial element substitution.

Examples of the positive electrode active material formed of an organic compound include polyaniline, polypyrrole, polyacene, a disulfide-based compound, a polysulfide-based compound, and an N-fluoro pyridinium salt. The positive electrode active material may be a mixture of the inorganic compound and the organic compound.

The average particle diameter of the positive electrode active material used in the present invention is usually 0.1 to 50 µm, and preferably 1 to 20 µm from viewpoints of improving battery characteristics such as load characteristics or cycle characteristics, being able to obtain an all-solid-state secondary battery having large charge/discharge capacity, easy handling of a positive electrode active material layer slurry composition, and easy handling in manufacturing a positive electrode. The average particle diameter can be determined by measuring a particle size distribution by laser diffraction.

### (Solid electrolyte particles)

As the solid electrolyte particles, those exemplified in the solid electrolyte layer can be used.

A weight ratio between the positive electrode active material and the solid electrolyte particles (positive electrode active material: solid electrolyte particles) is preferably 90: 10 to 50: 50, and more preferably 60: 40 to 80: 20. The weight ratio of the positive electrode active material within this range can suppress a phenomenon that the amount of the positive electrode active material in a battery is reduced because of a too small weight ratio of the positive electrode active material, leading to capacity reduction as a battery. Furthermore, the weight ratio of the solid electrolyte particles within this range can suppress a phenomenon that conductivity cannot be sufficiently obtained and the positive electrode active material cannot be used effectively because of a too small weight ratio of the solid electrolyte particles, leading to capacity reduction as a battery.

### (Binder for positive electrode)

The binder for a positive electrode is not particularly limited, but a binder containing the polymer having a particle structure and the water-soluble polymer as described above is preferably used.

The content of the binder for a positive electrode in the positive electrode active material layer slurry composition is preferably 0.1 to 5 parts by mass, and more preferably 0.2 to 4 parts by mass with respect to 100 parts by mass of the positive electrode active material from a viewpoint of being able to prevent a positive electrode active material from falling from an electrode without inhibiting a battery reaction.

As the organic solvent and other components added as necessary in the positive electrode active material layer slurry composition, similar compounds to those exemplified in the above-described solid electrolyte layer can be used. The content of the organic solvent in the positive electrode active material layer slurry composition is preferably 20 to 80 parts by mass, and more preferably 30 to 70 parts by mass with respect to 100 parts by mass of the positive electrode active material from a viewpoint of being able to obtain excellent coating characteristics while dispersibility of a solid electrolyte is maintained.

The positive electrode active material layer slurry composition may contain an additive exhibiting various functions, such as a conductive agent or a reinforcing material as other components added as necessary in addition to the above-described components. The additive is not particularly limited as long as having no influence on a battery reaction.

### (Conductive agent)

The conductive agent is not particularly limited as long as being able to impart conductivity, but usual examples thereof include carbon powder such as acetylene black, carbon black, or graphite, and fibers and foils of various metals.

### (Reinforcing material)

As the reinforcing material, various inorganic and organic spherical, plate-shaped, rod-shaped, or fibrous fillers can be used.

### (3) Negative electrode active material layer

The negative electrode active material layer contains a negative electrode active material.

### (Negative electrode active material)

Examples of the negative electrode active material include an allotrope of carbon, such as graphite or coke. The negative electrode active material formed of the above-described allotrope of carbon can be also used in a form of a mixture with a metal, a metal salt, an oxide, or the like, or a cover material. Examples of the negative electrode active material further include an oxide and a sulfate of silicon, tin, zinc, manganese, iron, or nickel, metallic lithium, a lithium alloy such as Li-Al, Li-Bi-Cd, or Li-Sn-Cd, a lithium transition metal nitride, and silicon. In a case of a metal material, a metal foil or a metal plate can be used as an electrode as it is, but the metal material may be used in a form of particles.

In this case, the negative electrode active material layer is formed by applying a negative electrode active material layer slurry composition containing a negative electrode active material, solid electrolyte particles, and a binder for a negative electrode onto a surface of a current collector described below, and drying the composition. The negative electrode active material layer slurry composition is manufactured by mixing a negative electrode active material, solid electrolyte particles, a binder for a negative electrode, an organic solvent, and other components added as necessary. Note that, as the solid electrolyte particles, the organic solvent, and other components added as necessary in the negative electrode active material layer slurry composition, similar compounds to those exemplified in the above-described positive electrode active material layer can be used.

In a case where the negative electrode active material is in a form of particles, the average particle diameter of the negative electrode active material is usually 1 to 50 µm, and preferably 15 to 30 µm from a viewpoint of improving battery characteristics such as an initial efficiency, load characteristics, or cycle characteristics.

A weight ratio between the negative electrode active material and the solid electrolyte particles (negative electrode active material: solid electrolyte particles) is preferably 90: 10 to 50: 50, and more preferably 60: 40 to 80: 20. The weight ratio of the negative electrode active material within this range can suppress a phenomenon that the amount of the negative electrode active material in a battery is reduced because of a too small weight ratio of the negative electrode active material, leading to capacity reduction as a battery. Furthermore, the weight ratio of the solid electrolyte particles within this range can suppress a phenomenon that conductivity cannot be sufficiently obtained and the negative electrode active material cannot be used effectively because of a too small weight ratio of the solid electrolyte particles, leading to capacity reduction as a battery.

### (Binder for negative electrode)

The binder for a negative electrode is not particularly limited, but a binder containing the polymer having a particle structure and the water-soluble polymer as described above is preferably used.

In a case where the negative electrode active material is in a form of particles, the content of the binder for a negative electrode in the negative electrode active material layer slurry composition is preferably 0.1 to 5 parts by mass, and more preferably 0.2 to 4 parts by mass with respect to 100 parts by mass of the negative electrode active material from a viewpoint of being able to prevent an electrode active material from falling from an electrode without inhibiting a battery reaction.

### (Current collector)

The current collector used for forming the positive electrode active material layer or the negative electrode active material layer is not particularly limited as long as being a material having electrical conductivity and electrochemical durability. However, for example, a metal material such as iron, copper, aluminum, nickel, stainless steel, titanium, tantalum, gold, or platinum is preferable from a viewpoint of heat resistance. Among the materials, aluminum is particularly preferable as a positive electrode, and copper is particularly preferable as a negative electrode. The shape of the current collector is not particularly limited, but a sheet-shaped current collector having a thickness of about 0.001 to 0.5 mm is preferable. The current collector is preferably subjected to a roughening treatment in advance to be used in order to enhance a bonding strength between the above-described positive and negative electrode active material layers. Examples of a roughening method include a mechanical polishing method, an electrolytic polishing method, and a chemical polishing method. In the mechanical polishing method, abrasive cloth and paper to which abrasive grains have been fixed, a grindstone, an emery wheel, a wire brush provided with a steel wire or the like, and the like are used. In addition, in order to enhance a bonding strength and conductivity between the current collector and the positive and negative electrode active material layers, an intermediate layer may be formed on a surface of the current collector.

### (Manufacture of solid electrolyte layer slurry composition)

The solid electrolyte layer slurry composition is obtained by mixing the above-described solid electrolyte particles, binder for a solid electrolyte layer, organic solvent, and other components added as necessary. Here, as the binder for a solid electrolyte layer, a binder containing the polymer having a particle structure and the water-soluble polymer is preferably used. As the binder for a solid electrolyte layer, the above-described binder composition is preferably added.

### (Manufacture of positive electrode active material layer slurry composition)

The positive electrode active material layer slurry composition is obtained by mixing the above-described positive electrode active material, solid electrolyte particles, binder for a positive electrode, organic solvent, and other components added as necessary. Here, as the binder for a positive electrode, a binder containing the polymer having a particle structure and the water-soluble polymer is preferably used. As the binder for a positive electrode, the above-described binder composition is preferably added.

### (Manufacture of negative electrode active material layer slurry composition)

The negative electrode active material layer slurry composition is obtained by mixing the above-described negative electrode active material, solid electrolyte particles, binder for a negative electrode, organic solvent, and other components added as necessary. Here, as the binder for a negative electrode, a binder containing the polymer having a particle structure and the water-soluble polymer is preferably used. As the binder for a negative electrode, the above-described binder composition is preferably added.

A method for mixing the above slurry composition is not particularly limited. However, examples thereof include a method using a mixing apparatus such as a stirring type apparatus, a shaking type apparatus, or a rotary type apparatus. Examples thereof further include a method using a dispersion kneading apparatus such as a homogenizer, a ball mill, a bead mill, a planetary mixer, a sand mill, a roll mill, or a planetary kneader. A method using a planetary mixer, a ball mill, or a bead mill is preferable from a viewpoint of being able to suppress aggregation of the solid electrolyte particles.

### (Manufacture of all-solid-state secondary battery)

A positive electrode in an all-solid-state secondary battery is manufactured by forming a positive electrode active material layer by applying the above-described positive electrode active material layer slurry composition onto a current collector, and drying the composition. When a metal foil is used as a negative electrode in the all-solid-state secondary battery, the metal foil can be used as it is. When a negative electrode active material is in a form of particles, the negative electrode is manufactured by forming a negative electrode active material layer by applying the above-described negative electrode active material layer slurry composition onto a current collector different from the current collector of the positive electrode, and drying the composition. Subsequently, a solid electrolyte layer slurry composition is applied onto the formed positive electrode active material layer or negative electrode active material layer, and the composition is dried to form a solid electrolyte layer. Then, by bonding an electrode in which a solid electrolyte layer has not been formed to the above-described electrode in which a solid electrolyte layer has been formed, an all-solid-state secondary battery device is manufactured.

A method for applying a positive electrode active material layer slurry composition and a negative electrode active material layer slurry composition onto a current collector is not particularly limited, but examples thereof include a doctor blade method, a dip method, a reverse roll method, a direct roll method, a gravure method, an extrusion method, and a brush application method. The application amount is not particularly limited, but is such an amount that the thickness of an active material layer formed after an organic solvent is removed is usually 5 to 300 µm, and preferably 10 to 250 µm. A drying method is not particularly limited, but examples thereof include drying with warm air, hot air, or low humidity air, vacuum drying, and drying by irradiation with a (far) infrared ray or an electron beam. A drying condition is usually adjusted such that an organic solvent volatilizes as soon as possible within a speed range which does not cause cracking in an active material layer due to stress concentration and does not cause an active material layer to peel from a current collector. Furthermore, the dried electrode may be pressed to be stabilized. Examples of a press method include a mold press method and a calender press method, but are not limited thereto.

Drying is performed at a temperature at which an organic solvent volatilizes sufficiently. Specifically, the drying temperature is preferably 50 to 250°C, and more preferably 80 to 200°C from a viewpoint of being able to form an excellent active material layer without causing thermal decomposition of binders for positive and negative electrodes. Drying time is not particularly limited, but drying is usually performed within a range of 10 to 60 minutes.

A method for applying a solid electrolyte layer slurry composition onto a positive electrode active material layer or a negative electrode active material layer is not particularly limited, but a method similar to the above-described method for applying a positive electrode active material layer slurry composition or a negative electrode active material layer slurry composition onto a current collector is used. However, a gravure method is preferable from a viewpoint of being able to form a thin film solid electrolyte layer. The application amount is not particularly limited, but is such an amount that the thickness of a solid electrolyte layer formed after an organic solvent is removed is 2 to 20 µm, and preferably 3 to 15 µm. A drying method, a drying condition, and a drying temperature are also similar to those for the above-described positive electrode active material layer slurry composition and negative electrode active material layer slurry composition.

Furthermore, the above-described laminate obtained by bonding an electrode in which a solid electrolyte layer has been formed to an electrode in which a solid electrolyte layer has not been formed may be pressurized. A pressurizing method is not particularly limited, but examples thereof include flat plate press, roll press, and cold isostatic press (CIP). The pressure for pressure press is preferably 5 to 700 MPa, and more preferably 7 to 500 MPa from a viewpoint of exhibiting excellent battery characteristics due to a low resistance at an interface between an electrode and a solid electrolyte layer, and a low contact resistance between particles in each layer. Note that, a solid electrolyte layer and an active material layer may be compressed by press, and the thickness thereof may be smaller than that before press. In a case where press is performed, the thickness of each of the solid electrolyte layer and the active material layer in the present invention after press only needs to be within the above range.

It is not particularly limited whether a solid electrolyte layer slurry composition is applied onto a positive electrode active material layer or a negative electrode active material layer. However, the solid electrolyte layer slurry composition is preferably applied onto an active material layer having a larger particle diameter of an electrode active material to be used. When the particle diameter of an electrode active material is large, unevenness is formed on a surface of an active material layer. Therefore, by applying the slurry composition thereonto, the unevenness on the surface of the active material layer can be relieved. Accordingly, when lamination is performed by bonding an electrode in which a solid electrolyte layer has been formed to an electrode in which a solid electrolyte layer has not been formed, a contact area between the solid electrolyte layer and the electrode is increased, and an interface resistance can be suppressed.

The obtained all-solid-state secondary battery device is left as it is, is wound, is bent, or the like in accordance with a battery shape, is put in a battery container, and is sealed to obtain an all-solid-state secondary battery. Further, an expand metal, an overcurrent prevention device such as a fuse or a PTC device, a lead plate, or the like is put in the battery container as necessary, and an increase in pressure in the battery and overcharge/overdischarge can be prevented. The shape of a battery may be any one of a coin type, a button type, a sheet type, a cylinder type, a rectangular shape, and a flat type.

### {Examples}

Hereinafter, the present invention will be described with reference to Examples, but the present invention is not limited in any way by these Examples. Characteristics are evaluated by the following methods. Note that, "part" and "%" in these Examples mean "part by mass" and "% by mass", respectively, unless otherwise particularly specified.

### <Measurement of thickness of solid electrolyte layer>

An all-solid-state secondary battery was pressed at a predetermined pressure, and then the thickness of an electrolyte layer was randomly measured at five points using a micrometer, and an average value thereof was calculated.

### <Gel fraction>

An aqueous dispersion of the obtained polymer having a particle structure was dried using a PTFE petri dish to manufacture a polymer film. The obtained film was immersed in THF for 24 hours, and was then filtered through a 200-mesh SUS wire gauze. The wire gauze after the filtration was dried at 100°C for 1 hour. A value obtained by dividing an increase in the weight of the wire gauze by the weight of the film (weight increase of wire gauze/weight of film) was used as a gel fraction.

### <Measurement of particle diameter>

In accordance with JIS Z8825-1:2001, a particle diameter was measured with a laser analysis apparatus (laser diffraction type particle size distribution measuring apparatus SALD-3100 manufactured by Shimadzu Corporation).

### <Measurement of binder water content>

The binder water content was measured by a volumetric method using a Karl Fischer moisture meter. The measurement was repeated three times and an average value thereof was used as a measurement value.

### <Storage stability of binder composition>

The obtained binder composition was sealed in a 500 mL glass container, and was allowed to stand at 23°C for one month. Presence or absence of precipitation was checked. A sample in which no precipitation or separation was visually observed was evaluated as "absence". A sample in which precipitation or separation was visually observed was evaluated as "presence".

### <Battery characteristics: output characteristics>

In a thermostatic chamber at 25°C, 5 cells of all-solid-state secondary batteries were charged to 4.3 V by a 0.1 C constant current method, and were then discharged to 3.0 V at 0.1 C to determine 0.1 C discharge capacity a. Thereafter, the 5 cells of all-solid-state secondary batteries were charged to 4.3 V at 0.1 C, and were then discharged to 3.0 V at 5 C to determine 5 C discharge capacity b. An average value of the values for the 5 cells was used as a measurement value, and a capacity retention ratio represented by a ratio of electric capacity between the 5 C discharge capacity b and the 0.1 C discharge capacity a (b/a (%)) was determined.

### <Battery characteristics: charge/discharge cycle characteristics>

Each of the obtained all-solid-state secondary batteries was subjected to a charge/discharge cycle in which the all-solid-state secondary batteries were charged to 4.2 V at a constant current, then charged at a constant voltage, and then discharged to 3.0 V at a constant current of 0.5 C by a constant-current constant-voltage charging method of 0.5 C at 25°C. The charge/discharge cycle was performed up to a 100th cycle. A ratio of discharge capacity at the 100th cycle with respect to initial discharge capacity was determined as a capacity retention ratio. A larger value of the ratio indicates a less decrease in capacity due to repeated charge/discharge and better charge/discharge cycle characteristics.

### {Example 1}

### <Manufacture of polymer having particle structure>

Into a glass container with a stirrer, 47 parts of ethyl acrylate, 47 parts of butyl acrylate, 5 parts of vinyl trimethylsilane, 1 part of ethylene glycol dimethacrylate as a crosslinking agent, 1 part of sodium dodecylbenzenesulfonate as an emulsifier, 150 parts of ion exchanged water, and 0.5 parts of potassium persulfate as a polymerization initiator were put, and were stirred sufficiently. Thereafter, the resulting mixture was heated to 70°C and polymerization was started. When the polymerization conversion rate reached 96%, cooling was started, and the reaction was stopped to obtain an aqueous dispersion of a polymer having a particle structure.

Then, the pH of the obtained aqueous dispersion was adjusted to 7 using a 10 wt% NaOH aqueous solution. The obtained polymer particles had a volume average particle diameter of 199 nm. The aqueous dispersion of the obtained polymer having a particle structure had a gel fraction of 97 wt%.

After completion of the polymerization reaction, heating and distillation under reduced pressure was performed at 80°C in order to remove an unreacted monomer of the above-described aqueous dispersion of the polymer having a particle structure, having a pH adjusted to 7.

### <Manufacture of composite particle binder>

To an aqueous dispersion of a polymer having a particle structure, having a solid content concentration of 30 wt% adjusted, a 5% aqueous solution of polyethylene glycol (manufactured by Aldrich, average molecular weight 100,000) as a water-soluble polymer was added in an amount of 0.7 parts in terms of solid content with respect to 100 parts of a solid content of the polymer, and the resulting mixture was mixed sufficiently. Thereafter, in order to exchange the solvent from water to an organic solvent, 500 g of xylene was added to 100 g of the aqueous dispersion of the polymer having a particle structure, and heating and distillation under reduced pressure was performed.

In a stage in which xylene was added to the mixture of the aqueous dispersion of the polymer having a particle structure and an aqueous solution of polyethylene glycol for solvent exchange, a transparent liquid and a white solid were present. After this system was dehydrated and was subjected to solvent exchange, the whole of this system was a translucent liquid, and the polymer particles formed composite particles in a state of being combined with the water-soluble polymer, and were dispersed in xylene. Note that, the obtained composite particles had a number average particle diameter of 400 nm. The xylene dispersion of the obtained composite particle binder had a water content of 25 ppm, and a solid content concentration of 8.7 wt%. No precipitation or separation was observed in a storage stability test.

### <Manufacture of positive electrode active material layer slurry composition>

100 parts of lithium cobaltate (average particle diameter: 11.5 µm) as a positive electrode active material, 150 parts of sulfide glass constituted by Li₂S and P₂S₅ (Li₂S/P₂S₅ = 70 mol%/30 mol%, average particle diameter: 2.2 µm) as solid electrolyte particles, 13 parts of acetylene black as a conductive agent, and 2 parts in terms of a solid content of the above-described xylene dispersion of a composite particle binder as a binder for a positive electrode were added. Xylene as an organic solvent was further added, and the solid content concentration was adjusted to 78%. Thereafter, the resulting mixture was mixed using a planetary mixer for 60 minutes. Furthermore, the solid content concentration was adjusted to 74% with xylene, and then the resulting mixture was mixed for 10 minutes to prepare a positive electrode active material layer slurry composition.

### <Manufacture of negative electrode active material layer slurry composition>

100 parts of graphite (average particle diameter: 20 µm) as a negative electrode active material, 50 parts of sulfide glass constituted by Li₂S and P₂S₅ (Li₂S/P₂S₅ = 70 mol%/30 mol%, average particle diameter: 2.2 µm) as solid electrolyte particles, and 2 parts in terms of a solid content of the above-described xylene dispersion of a composite particle binder as a binder for a negative electrode were added. Xylene as an organic solvent was further added, and the solid content concentration was adjusted to 60%. Thereafter, the resulting mixture was mixed using a planetary mixer to prepare a negative electrode active material layer slurry composition.

### <Manufacture of solid electrolyte layer slurry composition>

100 parts of sulfide glass constituted by Li₂S and P₂S₅ (Li₂S/P₂S₅ = 70 mol%/30 mol%, average particle diameter: 2.2 µm) as solid electrolyte particles, and 2 parts in terms of a solid content of the above-described xylene dispersion of a composite particle binder as a binder were added. Xylene as an organic solvent was further added, and the solid content concentration was adjusted to 30%. Thereafter, the resulting mixture was mixed using a planetary mixer to prepare a solid electrolyte layer slurry composition.

### <Manufacture of all-solid-state secondary battery>

The above-described positive electrode active material layer slurry composition was applied onto a surface of a current collector, and the composition was dried (110°C, 20 minutes) to form a positive electrode active material layer having a thickness of 50 µm. A positive electrode was thereby manufactured. The above-described negative electrode active material layer slurry composition was applied onto a surface of another current collector, and the composition was dried (110°C, 20 minutes) to form a negative electrode active material layer having a thickness of 30 µm. A negative electrode was thereby manufactured.

Subsequently, the above-described solid electrolyte layer slurry composition was applied onto a surface of the above-described positive electrode active material layer, and the composition was dried (110°C, 10 minutes) to form a solid electrolyte layer having a thickness of 26 µm.

The solid electrolyte layer laminated on the surface of the positive electrode active material layer and the negative electrode active material layer of the above-described negative electrode were bonded to each other, and were pressed to obtain an all-solid-state secondary battery. The thickness of the all-solid-state secondary battery after press was 65 µm. Output characteristics and charge/discharge cycle characteristics were evaluated using this battery. Table 1 indicates results thereof.

### {Example 2}

### <Manufacture of polymer having particle structure>

Into a glass container with a stirrer, 45 parts of ethyl acrylate, 45 parts of butyl acrylate, 10 parts of vinyl trimethylsilane, 1 part of ethylene glycol dimethacrylate as a crosslinking agent, 1 part of sodium dodecylbenzenesulfonate as an emulsifier, 150 parts of ion exchanged water, and 0.5 parts of potassium persulfate as a polymerization initiator were put, and were stirred sufficiently. Thereafter, the resulting mixture was heated to 70°C and polymerization was started. When the polymerization conversion rate reached 96%, cooling was started, and the reaction was stopped to obtain an aqueous dispersion of a polymer having a particle structure.

Then, the pH of the obtained aqueous dispersion was adjusted to 7 using a 10 wt% NaOH aqueous solution. The obtained polymer particles had a volume average particle diameter of 230 nm. The aqueous dispersion of the obtained polymer having a particle structure had a gel fraction of 98 wt%.

After completion of the polymerization reaction, heating and distillation under reduced pressure was performed at 80°C in order to remove an unreacted monomer of the above-described aqueous dispersion of the polymer having a particle structure, having a pH adjusted to 7.

### <Manufacture of composite particle binder>

To the above-described aqueous dispersion of a polymer having a particle structure, having a solid content concentration of 30 wt% adjusted, a 5% aqueous solution of polyethylene oxide (manufactured by Aldrich, average molecular weight 4,000,000) as a water-soluble polymer was added in an amount of 1 part in terms of solid content with respect to 100 parts of a solid content of the polymer, and the resulting mixture was mixed sufficiently. Thereafter, in order to exchange the solvent from water to an organic solvent, 500 g of xylene was added to 100 g of the aqueous dispersion of the polymer having a particle structure, and heating and distillation under reduced pressure was performed. The obtained composite particles had a number average particle diameter of 280 nm. The xylene dispersion of the obtained composite particle binder had a water content of 38 ppm, and a solid content concentration of 9.6 wt%. No precipitation or separation was observed in a storage stability test.

A positive electrode active material layer slurry composition, a negative electrode active material layer slurry composition, a solid electrolyte layer slurry composition, and an all-solid-state secondary battery were manufactured in a similar manner to Example 1 except that the xylene dispersion of the composite particle binder obtained above was used, and output characteristics and charge/discharge cycle characteristics were evaluated using the obtained battery. Table 1 indicates results thereof.

### {Example 3}

### <Manufacture of polymer having particle structure>

Into a glass container with a stirrer, 55 parts of ethyl acrylate, 45 parts of butyl acrylate, 5 parts of acrylonitrile, 1 part of ethylene glycol dimethacrylate as a crosslinking agent, 1 part of sodium dodecylbenzenesulfonate as an emulsifier, 150 parts of ion exchanged water, and 0.5 parts of potassium persulfate as a polymerization initiator were put, and were stirred sufficiently. Thereafter, the resulting mixture was heated to 70°C and polymerization was started. When the polymerization conversion rate reached 96%, cooling was started, and the reaction was stopped to obtain an aqueous dispersion of a polymer having a particle structure.

Then, the pH of the obtained aqueous dispersion was adjusted to 7 using a 10 wt% NaOH aqueous solution. The obtained polymer particles had a volume average particle diameter of 255 nm. The aqueous dispersion of the obtained polymer having a particle structure had a gel fraction of 95 wt%.

After completion of the polymerization reaction, heating and distillation under reduced pressure was performed at 80°C in order to remove an unreacted monomer of the above-described aqueous dispersion of the polymer having a particle structure, having a pH adjusted to 7.

### <Manufacture of composite particle binder>

A composite particle binder was manufactured in a similar manner to Example 1 except that the polymer having a particle structure obtained above was used and that 1 part in terms of solid content of a 5% aqueous solution of polyethylene oxide (manufactured by Aldrich, average molecular weight 4,000,000) was used as a water-soluble polymer. The obtained composite particles had a number average particle diameter of 340 nm. The xylene dispersion of the obtained composite particle binder had a water content of 43 ppm, and a solid content concentration of 7.9 wt%. No precipitation or separation was observed in a storage stability test.

A positive electrode active material layer slurry composition, a negative electrode active material layer slurry composition, a solid electrolyte layer slurry composition, and an all-solid-state secondary battery were manufactured in a similar manner to Example 1 except that the composite particle binder obtained above was used, and output characteristics and charge/discharge cycle characteristics were evaluated using the obtained battery. Table 1 indicates results thereof.

### {Example 4}

### <Manufacture of polymer having particle structure>

Into a glass container with a stirrer, 70 parts of 2-ethylhexyl acrylate, 10 parts of butyl acrylate, 5 parts of vinyl trimethylsilane, 15 parts of acrylonitrile, 1 part of ethylene glycol dimethacrylate as a crosslinking agent, 1 part of sodium dodecylbenzenesulfonate as an emulsifier, 150 parts of ion exchanged water, and 0.5 parts of potassium persulfate as a polymerization initiator were put, and were stirred sufficiently. Thereafter, the resulting mixture was heated to 70°C and polymerization was started. When the polymerization conversion rate reached 96%, cooling was started, and the reaction was stopped to obtain an aqueous dispersion of a polymer having a particle structure.

Then, the pH of the obtained aqueous dispersion was adjusted to 7 using a 10 wt% NaOH aqueous solution. The obtained polymer particles had a volume average particle diameter of 265 nm. The aqueous dispersion of the obtained polymer having a particle structure had a gel fraction of 95 wt%.

After completion of the polymerization reaction, heating and distillation under reduced pressure was performed at 80°C in order to remove an unreacted monomer of the above-described aqueous dispersion of the polymer having a particle structure, having a pH adjusted to 7.

### <Manufacture of composite particle binder>

A composite particle binder was manufactured in a similar manner to Example 1 except that the polymer having a particle structure obtained above was used and that 2 parts in terms of solid content of a 5% aqueous solution of polyethylene oxide (manufactured by Aldrich, average molecular weight 4,000,000) was used as a water-soluble polymer. The obtained composite particles had a number average particle diameter of 285 nm. The xylene dispersion of the obtained composite particle binder had a water content of 25 ppm, and a solid content concentration of 8.8 wt%. No precipitation or separation was observed in a storage stability test.

A positive electrode active material layer slurry composition, a negative electrode active material layer slurry composition, a solid electrolyte layer slurry composition, and an all-solid-state secondary battery were manufactured in a similar manner to Example 1 except that the composite particle binder obtained above was used, and output characteristics and charge/discharge cycle characteristics were evaluated using the obtained battery. Table 1 indicates results thereof.

### {Comparative Example 1}

A particulate binder was manufactured in a similar manner to Example 1 except that the polymer having a particle structure obtained in Example 3 was used and that a water-soluble polymer was not used and a composite particle was not formed. The obtained particulate binder had a number average particle diameter of 255 nm. The xylene dispersion of the obtained particulate binder had a water content of 18 ppm, and a solid content concentration of 7.9 wt%. No precipitation or separation was observed in a storage stability test.

A positive electrode active material layer slurry composition, a negative electrode active material layer slurry composition, a solid electrolyte layer slurry composition, and an all-solid-state secondary battery were manufactured in a similar manner to Example 1 except that the particulate binder obtained above was used, and output characteristics and charge/discharge cycle characteristics were evaluated using the obtained battery. Table 1 indicates results thereof.

### {Comparative Example 2}

100 parts in terms of solid content of the polymer having a particle structure obtained in Example 3 and 1 part of polyethylene oxide powder (manufactured by Aldrich, average molecular weight 4,000,000) as a water-soluble polymer were mixed using a bead mill to manufacture a binder mixture. The xylene dispersion of the obtained binder mixture had a water content of 33 ppm, and a solid content concentration of 8.0 wt%. Precipitation was observed in a storage stability test.

A positive electrode active material layer slurry composition, a negative electrode active material layer slurry composition, a solid electrolyte layer slurry composition, and an all-solid-state secondary battery were manufactured in a similar manner to Example 1 except that the binder mixture obtained above was used, and output characteristics and charge/discharge cycle characteristics were evaluated using the obtained battery. Table 1 indicates results thereof.

**{Table 1}**

| | Polymer having particle structure | | | | | | | | Water-soluble polymer (number of addition parts in terms of solid content with respect to 100 parts of polymer having particle structure) | | | Binder composition | | Storage stability test | Output characteristics | Charge /discharge cycle characteristics |
|---|---|---|---|---|---|---|---|---|---|---|---|---|---|---|---|---|
| | Ethyl acrylate (part) | Butyl acrylate (part) | 2-Ethylhexyl acrylate (part) | Vinyl trimethylsilane (part) | Acrylonitrile (part) | Crosslinking agent (part) | Particle diameter (nm) | Gel fraction (%) | Polyethylene glycol (part) (5 wt% aqueous solution) | Polyethylene oxide (part) (5 wt% aqueous solution) | Polyethylene oxide (part) (powder) | Particle diameter (nm) | Solid content concentration (%) | | Capacity retention ratio (%) | Capacity retention ratio (%) |
| Ex. 1 | 47 | 47 | 0 | 5 | 0 | 1 | 199 | 97 | 0.7 | 0 | 0 | 400 | 8.7 | absence | 94 | 88 |
| Ex. 2 | 45 | 45 | 0 | 10 | 0 | 1 | 230 | 98 | 0 | 1 | 0 | 280 | 9.6 | absence | 95 | 88 |
| Ex. 3 | 55 | 45 | 0 | 0 | 5 | 1 | 255 | 95 | 0 | 1 | 0 | 340 | 7.9 | absence | 93 | 86 |
| Ex. 4 | 0 | 10 | 70 | 5 | 15 | 1 | 265 | 95 | 0 | 2 | 0 | 285 | 8.8 | absence | 92 | 85 |
| Comp. Ex. 1 | 55 | 45 | 0 | 0 | 5 | 1 | 255 | 95 | 0 | 0 | 0 | 255 | 7.9 | absence | 83 | 75 |
| Comp. Ex. 2 | 55 | 45 | 0 | 0 | 5 | 1 | 255 | 95 | 0 | 0 | 1 | 255 | 8.0 | presence | 75 | 90 |

As indicated in Table 1, the all-solid-state secondary battery including a positive electrode having a positive electrode active material layer, a negative electrode having a negative electrode active material layer, and a solid electrolyte layer disposed between the positive and negative electrode active material layers, and formed using a binder containing a polymer having a particle structure and a water-soluble polymer had excellent output characteristics and charge/discharge cycles.

## Claims

1. An all-solid-state secondary battery comprising:
a positive electrode having a positive electrode active material layer;
a negative electrode having a negative electrode active material layer; and
a solid electrolyte layer disposed between the positive electrode active material layer and the negative electrode active material layer,
wherein the all-solid-state secondary battery is formed using a binder containing a polymer having a particle structure and a water-soluble polymer.

2. The all-solid-state secondary battery according to claim 1, wherein the solid electrolyte layer contains solid electrolyte particles, and the solid electrolyte particles are formed of sulfide glass constituted by Li₂S and P₂S₅.

3. The all-solid-state secondary battery according to claim 1 or 2, wherein the binder contains 80 to 99.1 wt% of the polymer having a particle structure.

4. The all-solid-state secondary battery according to any one of claims 1 to 3, wherein the polymer having a particle structure is an acrylate-based polymer.

5. The all-solid-state secondary battery according to any one of claims 1 to 4, wherein the binder according to claim 1 is formed of a binder composition obtained by exchanging a solvent of a mixture of an aqueous dispersion of the polymer having a particle structure and a solution of the water-soluble polymer for an organic solvent.
